# EUROPEAN PATENT SPECIFICATION

(11) **EP 0 844 060 B1**
(45) Date of publication and mention of the grant of the patent: **19.04.2006**
(21) Application number: 97308495.7
(22) Date of filing: 24.10.1997
(51) Int. Cl.: B29C 45/17, B60R 9/04

(54) **Method of manufacturing a hollow-portion-possessing roof rack for use on a motor vehicle**
Verfahren zur Herstellung einen Dachgepäckträger mit Hohlteil zur Verwendung auf einem Kraftfahrzeug
Procédé de fabrication une galerie de toit avec partie creuse utilisée sur un véhicule automobile

(30) Priority: 20.11.1996 JP 32469096
(43) Date of publication of application: 27.05.1998
(73) Proprietor: MITSUBISHI ENGINEERING-PLASTICS CORPORATION, Tokyo 104 (JP)
(72) Inventor: Iwakiri, Tsuneaki, Mitsubishi Eng. Plastics Corp., Horatsuka-shi, Kanagawa-Ken (JP); Shimaoka, Goro, Mitsubishi Eng. Plastics Corp., Horatsuka-shi, Kanagawa-Ken (JP); Kamano, Hidehiko, Mitsubishi Eng. Plastics Corp., Horatsuka-shi, Kanagawa-Ken (JP)
(74) Representative: Nicholls, Michael John

(56) References cited:
- EP-A- 0 635 349
- DE-A- 19 608 090
- GB-A- 2 312 406
- PATENT ABSTRACTS OF JAPAN vol. 97, no. 11, 28 November 1997 -& JP 09 183166 A (INOAC CORP), 15 July 1997 -& DATABASE WPI Section Ch, Week 9738 Derwent Publications Ltd., London, GB; Class A32, AN 97-410361 XP002101063
- PATENT ABSTRACTS OF JAPAN vol. 98, no. 10, 31 August 1998 & JP 10 129357 A (ASAHI CHEM IND CO LTD), 19 May 1998

## Description

The present invention relates to a roof rack for use on a motor vehicle (to be referred to as "a roof rack"), for carrying various articles such as a surfboard, a ski, etc., or for decoration, and a manufacturing method thereof. More specifically, it relates to a hollow-portion-possessing roof rack for use on a motor vehicle, which rack permits a decrease in weight and the number of parts therefor, and a manufacturing method thereof.

Roofs of some motor vehicles are equipped with a roof rack for carrying a surfboard, a ski, etc., or for decoration. A conventional roof rack comprises three discrete parts such as a rack body member and two leg members. The leg members for attaching the roof rack to the roof of a motor vehicle are fixed to both ends of the rack body member. Conventionally, the leg member is formed of an aluminum die casting part, a urethane forming part in which a metal bracket is inserted, or a combination part of an aluminum die casting part and a plastic cover. The rack body member is generally formed of metal such as aluminum.

When the leg member is fabricated from aluminum die casting, it is required to remove burrs formed during the die casting from the as-produced leg member, which requires excessive labor and additional cost. When compared with a leg member formed of plastic, the weight of the leg member formed of an aluminum die casting part is about double, which contradicts the stream toward the decreasing of the weight of a motor vehicle. When the leg member is formed of a urethane forming part in which a metal bracket is inserted, the problem is that the leg member inevitably has a surface having fine concave or convex forms so that its appearance is poor. Further, when the leg member is formed of a combination part of an aluminum die casting part and a plastic cover, it is required to assemble these parts for the leg member. JP-A-8-2336 discloses a technique for manufacturing a roof rack, in which leg members alone have hollow portions, are formed of plastic and are produced by a gas-assisted injection molding method. The above technique is advantageous in the decreasing of the weight of leg members and the reduction of deburring. However, the roof rack as a whole requires deburring, and it is further demanded to reduce the secondary processing procedures including deburring and to decrease the weight of a roof rack.

It is therefore an object of the present invention to provide a method of manufacturing a hollow-portion-possessing roof rack for use on a motor vehicle, which roof rack permits a decrease in weight and a reduction in labor and cost.

Accordingly, the present invention provides a method of manufacturing a hollow-portion-possessing roof rack for use on a motor vehicle, which comprises a rack body member and leg members on both ends of the rack body member, said leg members being attached to the motor vehicle, and in which the rack body member and the leg members are integrally formed,
the method comprising;
providing a mold having a cavity for forming the roof rack, a resin injection portion and a pressurized fluid introducing portion, said cavity being formed in the mold such that the longitudinal direction of the rack body member is generally in agreement with the vertical direction of the mold, the resin injection portion being arranged in the mold so as to permit the injection of the molten thermoplastic resin into a lower end portion of the cavity, and the pressurized fluid introducing portion being arranged in the mold so as to permit the introduction of the pressured fluid into the thermoplastic resin through the lower end portion of the cavity,
injecting a molten thermoplastic resin into the cavity through the resin injection portion, and introducing a pressurized fluid having a pressure of 20 to 500 kgf/cm²-G into the thermoplastic resin in the cavity through the pressurized fluid introducing portion.

In the above injection molding, various molding conditions such as the temperature of the molten thermoplastic resin, the injection pressure and rate employed for injecting the molten thermoplastic resin, the time, amount, pressure and rate employed for introducing the pressurized fluid and a time period for which the thermoplastic resin in the cavity is cooled, can be properly selected and determined depending upon the kind and properties of a thermoplastic resin to be used or the form of a roof rack for use on a motor vehicle to be manufactured. For example, the temperature of the molten thermoplastic resin is 250 - 320°C, and the injection pressure is 600 - 1500 kgf/cm²⁻G. The amount of the molten thermoplastic resin to be injected into the cavity may be an amount of which the cavity is completely full or is not completely full. The time period for cooling the thermoplastic resin in the cavity is preferably 20 - 360 seconds after the initiation of injection of the molten thermoplastic resin into the cavity.

Although not specially limited, the hollow portion is preferably formed through the entire portion of the rack body member and part of each of the leg members on both ends of the rack body member. Alternatively, the hollow portion may be formed in the entire portion of the rack body member and part of one of the leg members, in part of the rack body member and part of one of the leg members, in the entire portion of the rack body member alone or in part of the rack body member.

The pressurized fluid used in the present invention is a substance in a gaseous state at room temperature under atmospheric pressure. Any one of such substances may be used so long as it is inert to the thermoplastic resin used. In view of safety and economic performance, a nitrogen gas is preferred. Preferably, the introduction of the pressurized fluid into a thermoplastic resin in the cavity is initiated concurrently with the initiation of injection of the molten thermoplastic resin into the cavity or within 15 seconds after the initiation of injection of the molten thermoplastic resin into the cavity. The pressurized fluid is required to have a pressure of 20 - 500 kgf/cm²-G. When the pressurized fluid has a pressure of less than 20 kgf/cm²-G, it may be difficult to form a desired hollow portion in a roof rack, and in some cases, a sink mark is formed in the surface of a roof rack. When it is necessary to emboss the surface of a roof rack, the transferability of an embossing formed on a cavity wall of the mold to the roof rack is poor. On the other hand, when the pressure of the pressurized fluid exceeds 500 kgf/cm²-G, the releasability of a roof rack from the mold is poor, or there is another problem in the residual stress of a roof rack. Preferably, the introduction of the pressurized fluid into the thermoplastic resin in the cavity is continued until the thermoplastic resin in the cavity is cooled and solidified to some extent.

In the manufacturing method for a roof rack for use on a motor vehicle provided by the present invention, a third leg member may be formed, for example, in a central portion of the rack body member integrally with the rack body member. In this case, one third leg member or a plurality of third leg members may be formed. Alternatively, a third leg member formed continuously from the leg members on both ends of the rack body member may be provided in the rack body member integrally with the rack body member. In this case, one third leg member or a plurality of third leg members may be formed as well. The leg member may be provided with a bolt, a bracket and a rubber sheet member for mounting the roof rack on a motor vehicle or a roof thereof. The rubber sheet member is put between the motor vehicle or the roof thereof and the bottom portion of the leg member is covered with the rubber sheet member.

The roof rack for use on a motor vehicle, provided by the method of the present invention, may have a surface which is not coated or which is coated, plated or hard-coated.

In the above constitution, it is made possible to prevent a drawdown phenomenon of a molten thermoplastic resin being drawn down by its own weight in the cavity when the molten thermoplastic resin is injected into the cavity, and a uniform hollow portion can be obtained when the pressurized fluid is introduced.

The thermoplastic resin used in the present invention is preferably selected from a polycarbonate resin, a thermoplastic polyester resin, a polystyrene resin, a polyarylene ester resin, a polyolefin resin, a diene resin, a polyamide resin, a polyether resin, a polysulfone resin and a polyphenylene resin. These resins are used alone or in combination. The roof rack is required to have gasoline resistance and wax-removal resistance since it is an exterior part. For this purpose, it is preferred, for example, to use an alloy material formed from a polycarbonate resin and other thermoplastic polyester resin such as a polyethylene terephthalate (PET) rein or a polybutylene terephthalate (PBT) resin.

The polycarbonate resin used in the present invention includes thermoplastic aromatic polycarbonate polymers or copolymers which are obtained by reacting an aromatic dihydroxy compound, or a combination of an aromatic dihydroxy compound and a small amount of a polyhydroxy compound with phosgene or a carbonate diester and which may be branched. The above polycarbonate resins may be used alone or in combination.

The above aromatic dihydroxy compound includes bis(hydroxyaryl)alkanes such as 2,2-bis(4-hdyroxyphenyl)propane (= bisphenol A), 2,2-bis(3,5-dibromo-4-hydroxyphenyl)propane (= tetrabromobisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxy-3-methylphenyl)propane, 1,1-bis(3-tert-butyl-4-hydroxyphenyl)propane, 2,2-bis(4-hydroxy-3,5-dimethylphenyl)propane, 2,2-bis(3-bromo-4-hydroxyphenyl)propane, 2,2-bis(3,5-dichloro-4-hydroxyphenyl)propane, 2,2-bis(3-phenyl-4-hydroxyphenyl)propane, 2,2-bis(3-cyclohexyl-4-hdyroxyphenyl)propane, 1,1-bis(4-hdyroxyphenyl-1-phenyl)ethane and bis(4-hydroxyphenyl)diphenylmethane; bis(hydroxyaryl)cycloalkanes such as 1,1-bis(4-hydroxyphenyl)cyclopentane and 1,1-bis(4-hydroxyphenyl)cyclohexane; dihydroxydiaryl ethers such as 4,4'-dihydroxydiphenyl ether and 4,4'-dihydroxy-3,3'-dimethyldiphenyl ether; dihydroxydiarylsulfides such as 4,4'-dihydroxydiphenylsulfide and 4,4'-dihydroxy-3,3'-dimethyldiphenylsulfide; dihydroxydiarylsulfoxides such as 4,4'-dihydroxydiphenylsulfoxide and 4,4'-dihydroxy-3,3'-dimethyldiphenylsulfoxide; dihydroxydiarylsulfones such as 4,4'-dihydroxydiphenylsulfone and 4,4'-dihydroxy-3,3'-dimethyldiphenylsulfone; hydroquinone, resorcin and 4,4'-dihydroxydiphenyl. The above aromatic dihydroxy compounds may be used alone or in combination. Of these compounds, 2,2-bis(4-hydroxyphenyl)propane is preferred.

A branched aromatic polycarbonate resin can be obtained from a polyhydroxy compound such as fluoroglycine, 2,6-dimethyl-2,4,6-tri(4-hydroxyphenyl)-3-heptene, 4,6-dimethyl-2,4,6-tri(4-hydroxyphenyl)-2-heptene, 1,3,5-tri(2-hydroxyphenyl)benzole, 1,1,1-tri(4-hydroxyphenyl)ethane, 2,6-bis(2-hydroxy-5-methylbenzyl)-4-methylphenol and α,α',α"-tri(4-hydroxyphenyl)-1,3,5'-triisopropylbenzene, and any one selected from 3,3-bis(4-hydroxyaryl)oxyindole (= isatin bisphenol), 5-chloroisatin bisphenol, 5,7-dichloroisatin bisphenol and 5-bromoisatin bisphenol.

When a phosgene method is used for obtaining a polycarbonate resin, an end terminater or a molecular weight adjusting agent may be used. The end terminater or the molecular weight adjusting agent includes compounds having monohydric phenolic group, such as phenol, p-tert-butylphenol, tribromophenol, long-chain-alkyl phenol, aliphatic carboxylic acid chloride, aliphatic carboxylic acid, hydroxybenzoic acid alkyl ester and alkyl ether phenol.

The polycarbonate preferably has a viscosity-average molecular weight of 15000 to 30000. The "viscosity-average molecular weight" is obtained by measuring a polycarbonate for a melt viscosity at a temperature of 25°C in the presence of methylene chloride as a solvent and converting the obtained measurement value. When the viscosity-average molecular weight is less than 15000, molding is difficult since the molten thermoplastic resin shows the drawdown phenomenon of the resin being drawn down by its own weight in the cavity, and a resultant molded article physically shows a decrease in impact resistance. When the above viscosity-average molecular weight exceeds 30000, the molten thermoplastic resin has too high a viscosity to introduce a pressurized fluid into the molten thermoplastic resin.

The thermoplastic polyester resin used in the present invention refers to a polymer obtained by reacting an aromatic dicarboxylic acid or a diester thereof with a glycol or alkylene oxide according to a known method. Specifically, the thermoplastic polyester resin is obtained by reacting an aromatic dicarboxylic acid containing terephthalic acid, dimethyl terephthalate, naphthalenedicarboxylic acid or dimethyl naphthalenedicarboxylate as a main component with ethylene glycol, butanediol, cyclohexanedimethanol or ethylene oxide, and the so-obtained thermoplastic polyester resin includes polyethylene terephthalate, polytetramethylene terephthalate (polybutylene terephthalate), polyethylene naphthalate and polytetramethylene naphthalate (polybutylene naphthalate). It is preferred to use polyethylene terephthalate or polybutylene terephthalate. Further, the thermoplastic polyester resin may be a copolymer, such as a copolymer obtained from cyclohexanedimethanol and terephthalic acid or isophthalic acid or a copolymer obtained from cyclohexanedimethanol, ethylene glycol and terephthalic acid.

The thermoplastic polyester resin in the present invention preferably has an intrinsic viscosity of 0.4 to 2 when measured in mixed solvents having a phenol/tetrachloroethylene mixing ratio of 6/4 at 30°C. When the above intrinsic viscosity is less than 0.4, a formed roof rack is liable to be insufficient in impact resistance and chemical resistance. When the intrinsic viscosity exceeds 2, the thermoplastic polyester resin is liable to show degraded processability. The thermoplastic polyester resin more preferably has an intrinsic viscosity of 0.5 to 1.5.

The polystyrene resin used in the present invention includes a PS resin, an ABS resin, an AES resin, an MBS resin, an MAS resin, an AAS resin, a styrene-butadiene block copolymer and a styrene-maleic anhydride copolymer.

The polyarylene ester resin used in the present invention refers to a polymer or a copolymer obtained by the polycondensation of an aromatic dihydroxy compound or its derivative and an aromatic dicarboxylic acid or its derivative as main components. The aromatic dihydroxy compound can be preferably selected from those explained with regard to the polycarbonate resin. The derivative of the aromatic dihydroxy compound includes diesters obtained from the above aromatic dihydroxy compounds and an aliphatic acid or an aromatic dicarboxylic acid. The aromatic dicarboxylic acid can be preferably selected from those explained with regard to the thermoplastic polyester resin.

The polyolefin resin used in the present invention includes a polyethylene resin and a polypropylene resin. The polyethylene resin includes a high-density polyethylene resin, a low-density polyethylene resin, a linear low-density polyethylene resin, an ethylene-vinyl acetate copolymer, an ethylene-propylene copolymer, an ethylene-acrylic ester copolymer and an ethylene-glycidyl (meth)acrylate copolymer. The polypropylene resin includes a polypropylene resin, a propylene-vinyl acetate copolymer and a propylene-vinyl chloride copolymer.

The diene resin used in the present invention includes a homopolymer of a monomer having a diene structure, a copolymer obtained from a monomer having a diene structure and a monomer copolymerizable therewith, and a mixture of the homopolymer and the copolymer. Specific examples thereof include a 1,2-polybutadiene resin and a trans-1,4-polybutadiene resin.

The polyamide resin used in the present invention includes a homopolymer of an aminocarboxylic acid compound, a copolymer obtained from a dicarboxylic acid compound and a diamine compound and a polymer obtained by the ring-opening polymerization of α,ω-caprolactam. Specific examples thereof inlcude nylon 6, nylon 66, nylon 610 and nylon 11.

The polyether resin used in the present invention includes a polyphenylene ether resin and a polyacetal resin. Further, the polysulfone resin refers to a polymer having a molecule containing an -SO₂- bond, such as a polysulfone resin. The phenylene resin includes polyphenylene sulfide.

The thermoplastic resin used in the present invention may further contain an additive for imparting desired properties as required. Examples of the additive include an impact improver, a flame retardant, an antioxidant, a heat stabilizer, an antistatic agent, a plasticizer, a mold releasing agent, a lubricant, a compatibilizer, a foaming agent, reinforcing materials such as a glass fiber, a carbon fiber, ceramic whisker and talc, a filler, a dye and a pigment. These additives may be incorporated alone or in combination as required.

In the manufacturing method of a roof rack for use on a motor vehicle provided by the present invention, a roof rack which has a hollow portion and in which a rack body member and leg members on both ends of the rack body member are integrally formed, can be manufactured by injecting a molten thermoplastic resin into a cavity and introducing a pressured fluid having a controlled pressure into the thermoplastic resin. As a result, the labor for manufacturing of the roof can be reduced, the production cost is decreased and the number of parts can be decreased. Further, no sink mark occurs on the roof rack, and the roof rack has an excellent appearance. Moreover, the obtained roof rack has a hollow portion formed by the introduction of the pressurized fluid into the thermoplastic resin, so that the roof rack can be decreased in weight and that the molding cycle can be abbreviated.

The invention will be further described by way of example with reference to drawings hereinafter.
Fig. 1 is a schematic cross-sectional view of a mold suitable for manufacturing a hollow-portion-possessing roof rack for use on a motor vehicle, provided by the present invention.
Fig. 2 is a schematic cross-sectional view of a mold, showing a state where a molten thermoplastic resin is injected into a cavity of the mold shown in Fig. 1 and then a pressurized fluid is introduced.
Figs. 3A and 3B are a cross-sectional view and a bottom view of a hollow-portion-possessing roof rack for use on a motor vehicle, provided by the present invention.
Fig. 4 is a schematic cross-sectional view of a mold for manufacturing a roof rack for use on a motor vehicle, used in Comparative Example 1.
Fig. 5 is a schematic cross-sectional view of a roof rack for use on a motor vehicle, manufactured by means of the mold shown in Fig. 4.
Figs. 6A, 6B, 6C and 6D are a schematic cross-sectional view, a bottom view and end views of a variant of a hollow-portion-possessing roof rack for use on a motor vehicle, provided by the present invention.

### DESCRIPTION OF THE PREFERRED EMBODIMENTS

### Example 1

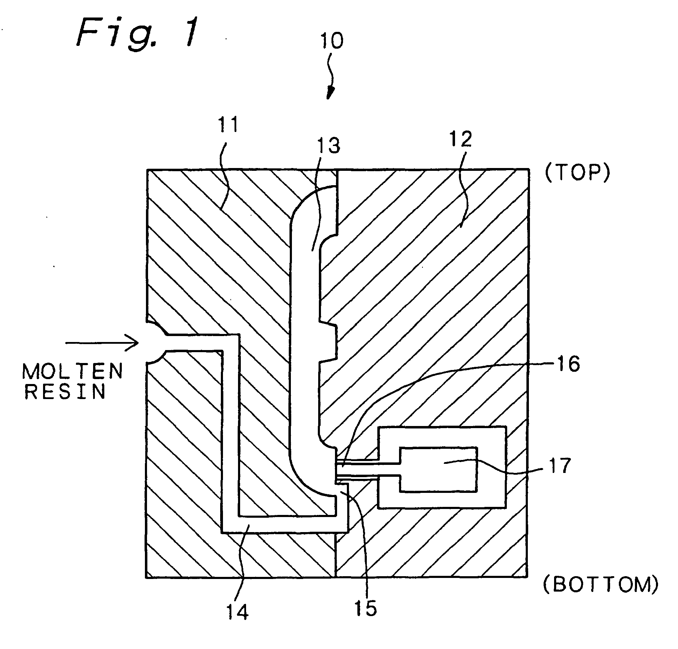

Fig. 1 shows a schematic cross-sectional view of a mold used in Example 1. This mold 10 comprises a fixed mold member 11 and a movable mold member 12. The mold 10 has a cavity 13 for forming a roof rack for use on a motor vehicle, a resin injection portion (resin gate portion) 15 for injecting a molten thermoplastic resin into the cavity 13 and a pressurized fluid introducing portion 16 for introducing a pressurized fluid into a thermoplastic resin in the cavity 13. The cavity 13 is formed by clamping the fixed mold member 11 and the movable mold member 12. In Example 1, those surfaces (cavity walls) of the fixed mold member 11 and the movable mold member 12 which constitute the cavity 13 are embossed. In Fig. 1, reference numeral 14 refers to a hot runner. The pressurized fluid introducing portion 16 may be, for example, a known gas injection nozzle provided with a check valve (not shown) in its top end. The other end of the pressurized fluid introducing portion 16 is connected to a pressurized fluid source through a piping (not shown). Further, the top end of the pressurized fluid introducing portion 16 is movable leftward and rightward in Fig. 1 by means of a hydraulic cylinder 17.

As shown in Fig. 1, the cavity 13 is formed in the mold 10 such that the longitudinal direction of a rack body member is generally in agreement with the vertical direction of the mold 10. The resin injection portion 15 is arranged in the mold 10 so as to inject the molten thermoplastic resin to a lower end portion of the cavity 13. Further, the pressurized fluid introducing portion 16 is arranged in the mold 10 so as to introduce the pressurized fluid into the thermoplastic resin through the lower end portion of the cavity 13. The position of the resin injection portion 15 in the mold 10 is not strictly required to be a position which enables the injection of the thermoplastic resin into the lower end portion of the cavity 13. The essential factor is that the resin injection portion 15 is arranged in the mold 10 such that most of the molten thermoplastic resin fills the cavity 14 upwardly from the bottom of the cavity 13 toward the top thereof. The position of the pressurized fluid introducing portion 16 in the mold 10 is not strictly required to be a position which enables the introduction of the pressurized fluid into the thermoplastic resin from the lower end portion of the cavity 13. The essential factor is that the pressurized fluid introducing portion 16 is arranged in the mold 10 such that most of the pressurized fluid flows upwardly from the bottom of the cavity 13 toward the top thereof. The cavity 13 has such a form that a rack body member 31 of a roof rack 30 and leg members 32 on both ends of the rack body member 31 are integrally formed and further that a leg member 32A as a third leg member is formed in a central portion of the rack body member 31 integrally with the rack body member 31. In Example 1, the roof rack 30 has a length of 1.9 m and the rack body member 31 had a cross sectional area of about 13 cm².

Example 1 used, as a thermoplastic resin, an alloy material (trade name: Iupilon MB4305, supplied by Mitsubishi Engineering-Plastics Corps.) prepared from a polycarbonate resin and a polybutylene terephthalate resin. The thermoplastic resin was melted and plasticized in an injection cylinder of an injection molding machine (not shown) at a resin temperature of 260°C, and the molten resin was injected into the cavity 13 from the resin injection portion (resin gate portion) 15 through the hot runner 14 under the following injection conditions. The injection amount of the molten thermoplastic resin was set so as to completely fill the cavity 13. After the mold 10 was clamped, the top end portion of the pressurized fluid introducing portion 16 was moved leftward in Fig. 1 by actuating the hydraulic cylinder 17 and kept in contact with the mold.

Injection conditions
Injection pressure: 1500 kgf/cm²-G
Mold temperature: 80°C

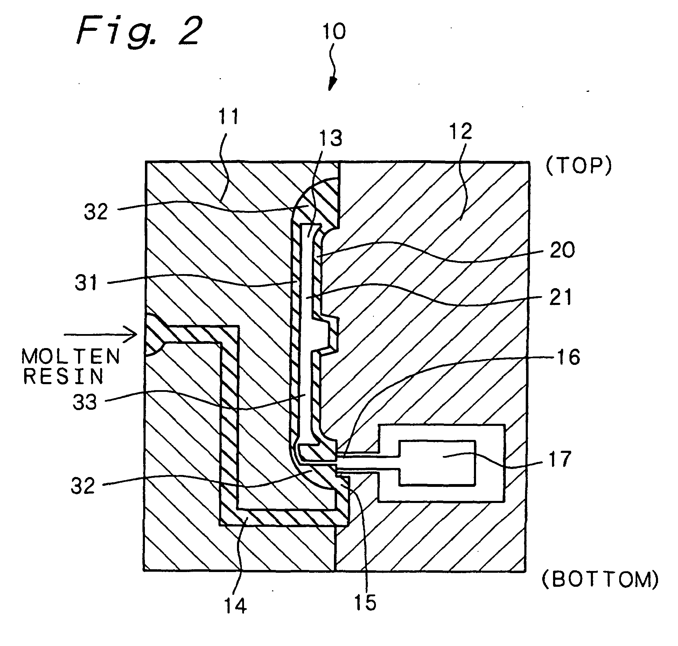

About one second after the initiation of injection of the molten thermoplastic resin, a pressurized fluid (nitrogen gas) having a pressure of 100 kgf/cm²-G was introduced into the thermoplastic resin in the cavity 13 through the pressurized fluid introducing portion 16. Fig. 2 shows a state at this stage. In Fig. 2, reference numeral 20 refers to the molten thermoplastic resin injected into the cavity 13, and reference numeral 21 refers to a hollow portion. Three minutes after the initiation of injection of the molten thermoplastic resin into the cavity 13, the hydraulic cylinder 17 was actuated to move the top end portion of the pressurized fluid introducing portion 16 rightward in Fig. 2 so that the top end portion of the pressurized fluid introducing portion 16 and the mold were released from close contact to each other. As a result, the pressurized fluid in the hollow portion 21 was released to atmosphere. Then, a molded article, i.e., a roof rack for use on a motor vehicle, was taken out from the mold.

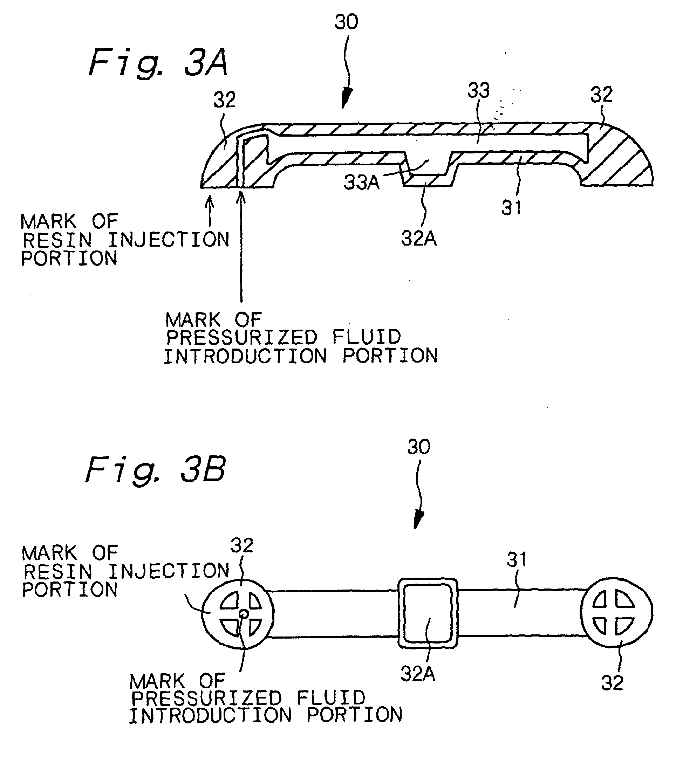

The roof rack had an excellent appearance. That is, the appearance was free of a flow mark of the resin and remarkably fine, and the transferability of an embossing was excellent. Further, the thick-wall portion of the roof rack was free of any sink mark, no distortion was found in the entire roof rack, and no occurrence of burr was found. When the roof rack was sectioned to inspect its interior state, the hollow portion was excellently formed in the roof rack, and the wall thickness of the roof rack was uniform. Fig. 3A shows a schematic cross-sectional view of the roof rack, and Fig. 3B shows a schematic bottom view of the roof rack. Inside the roof rack, more specifically, inside the rack body member 31 as a whole and inside part of the leg members 32, a uniform hollow portion 33 was formed. Further, inside the leg members 32A formed in the central portion of the rack body member 31 integrally with the rack body member 31, a hollow portion 33A communicating with the hollow portion 33 was formed. The roof rack had a weight of 2.7 kg, which value was about 1/2 of the weight of a roof rack entirely formed of aluminum.

### Comparative Example 1

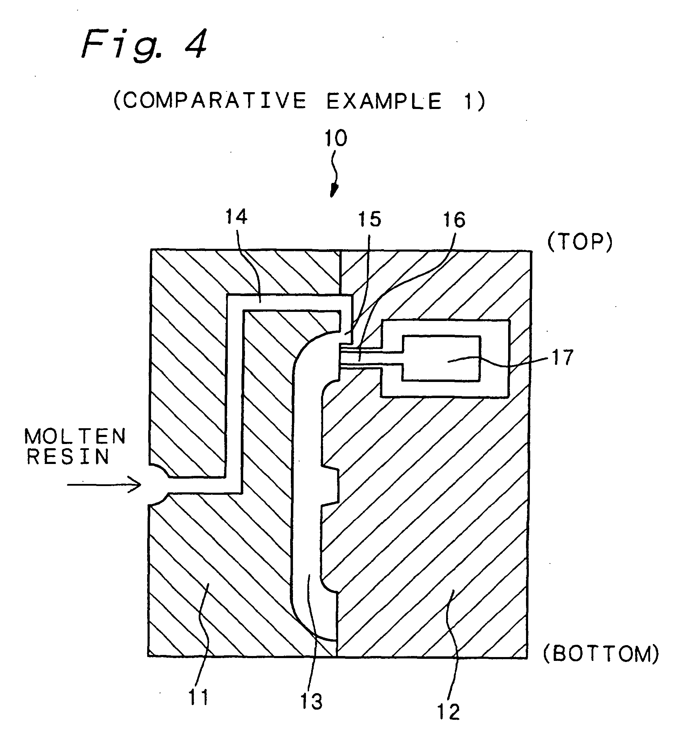

Comparative Example 1 used a mold similar to the mold used in Example 1 and the same thermoplastic resin as that used in Example 1. The differences of Comparative Example 1 from Example 1 were that, as shown in Fig. 4, a resin injection portion 15 was arranged in a mold 10 so as to inject a molten thermoplastic resin into a top end portion of a cavity 13 and further that a pressurized fluid introducing portion 16 was arranged in the mold 10 so as to introduce a pressurized fluid into the thermoplastic resin from the top end of the cavity 13, although the cavity 13 was formed in the mold 10 such that the longitudinal direction of a rack body member was generally in agreement with the vertical direction of the mold 10. The conditions of injection of the molten thermoplastic resin into the cavity, the conditions of introduction of the pressurized fluid and the cooling condition were the same as those in Example 1.

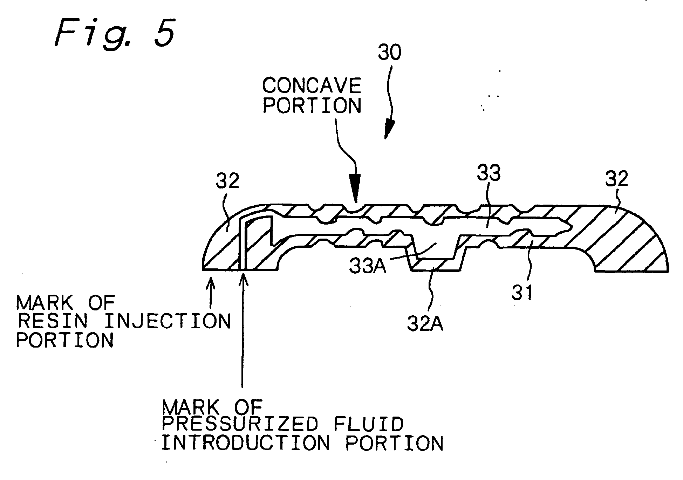

On the appearance of an obtained roof rack, the occurrence of a drawdown phenomenon was found. The cavity was not fully filled with the molten thermoplastic resin. As Fig. 5 shows a schematic cross-sectional view, concave portions were observed on the surface of the roof rack. When the roof rack was sectioned to inspect the interior state, it was found that no pressurized fluid was introduced into a terminal portion of the roof rack (a portion corresponding to a lower end portion of the cavity 13 in Fig. 4). Further, a hollow portion 33 had convex portions formed, and the roof rack had a non-uniform wall thickness.

### Comparative Example 2

Comparative Example 2 used the same mold and the same thermoplastic resin as those used in Example 1. A roof rack for use on a motor vehicle was manufactured without introducing a pressurized fluid into the thermoplastic resin in the cavity. The molten thermoplastic resin was injected into the cavity in such an amount that the cavity was completely filled. After the injection of the molten thermoplastic resin into the cavity, a dwell pressure of 800 kgf/cm²-G was applied. Five minutes after the initiation of injection of the molten thermoplastic resin into the cavity, a roof rack was taken out of the mold.

The obtained roof rack had the following appearance. Large sink marks having a size (depth) of 1 to 3 mm occurred in a thick wall portion of the roof rack, and distortion was also observed. Further, a flow mark of the resin was observed in a terminal portion of the roof rack, and in general, the appearance was poor. Further, a burr having a size (height) of about 0.3 mm was observed in that portion of the roof rack which corresponded to the parting surface of the mold. Moreover, the roof rack had a weight of 3.5 kg, which value was greater than the weight of roof rack obtained in Example 1 by 23 %.

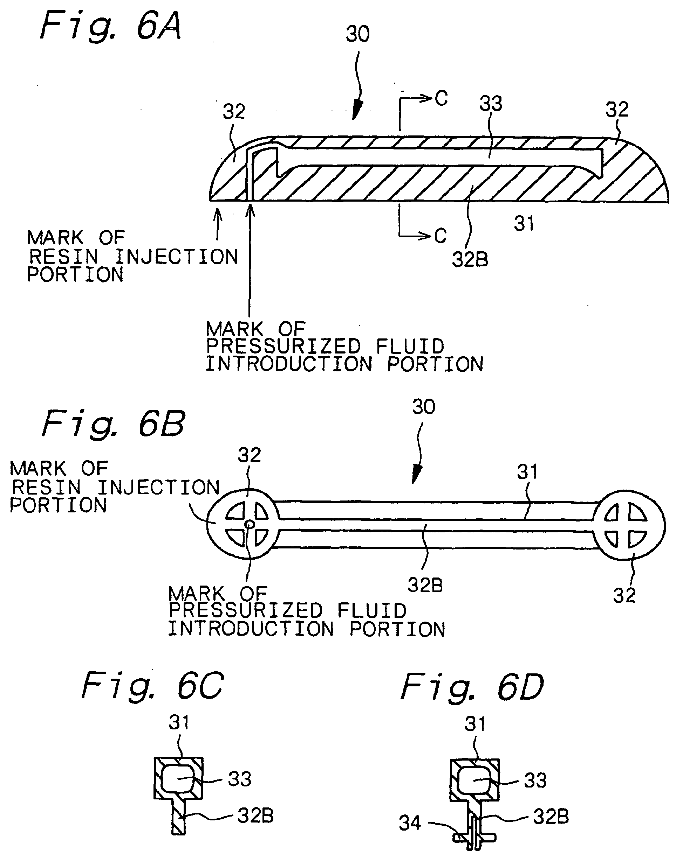

The present invention has been explained above with reference to preferred embodiments, while the present invention shall not be limited to those embodiments. The structure of the mold, the various conditions of the molding and the thermoplastic resin used in the above embodiments are examples and can be properly modified. Further, the form of the roof rack for use on a motor vehicle in the above embodiments is also an example. As Fig. 6A schematically shows a cross-sectional view of a roof rack for use on a motor vehicle taken along its longitudinal direction, as Fig. 6B schematically shows its bottom view and as Fig. 6C shows its end view taken along a line C-C in Fig. 6A, the roof rack for use on a motor vehicle may have a form in which a third leg member 32B formed continuously from leg members 32 on both ends of a rack body member 31 is formed in the rack body member 31 integrally with the rack body member 31. Further, as Fig. 6D shows an end view taken along a line C-C in Fig. 6A, the roof rack for use on a motor vehicle has a form in which projections 34 are formed on sides of the leg member 32B. In this form, the roof rack can be reliably attached to a roof of a motor vehicle by providing the roof of the motor vehicle with a groove portion which engages that portion of the third leg member 32B which is lower than the projection 34.

## Claims

1. A method of manufacturing a hollow-portion-possessing roof rack (30) for use on a motor vehicle, which comprises a rack body member (31) and leg members (32) on both ends of the rack body member (31), said leg members (32) being attached to the motor vehicle, and in which the rack body member (31) and the leg members (32) are integrally formed,
the method comprising;
providing a mold (10) having a cavity (13) for forming the roof rack (30), a resin injection portion (15) and a pressurized fluid introducing portion, (16) said cavity (13) being formed in the mold (10) such that the longitudinal direction of the rack body member (31) is generally in agreement with the vertical direction of the mold (10), the resin injection portion (15) being arranged in the mold (10) so as to permit the injection of the molten thermoplastic resin into a lower end portion of the cavity (13), and the pressurized fluid introducing portion (16) being arranged in the mold (10) so as to permit the introduction of the pressured fluid into the thermoplastic resin through the lower end portion of the cavity (13),
injecting a molten thermoplastic resin into the cavity (13) through the resin injection portion (15), and
introducing a pressurized fluid having a pressure of 20 to 500 kgf/cm²-G into the thermoplastic resin in the cavity (13) through the pressurized fluid introducing portion (16).

2. The method according to claim 1 wherein a third leg member (32A) is formed in a central portion of the rack body member (31) integrally with the rack body member (31).

3. The method according to claim 1 wherein a third leg member (32A) formed continuously from the leg members (32) on both ends of the rack body member (31) is provided in the rack body member (31) integrally with the rack body member (31).

4. The method according to claim 1, 2 or 3, wherein the thermoplastic resin is at least one thermoplastic resin selected from the group consisting of a polycarbonate resin, a thermoplastic polyester resin, a polystyrene resin, a polyarylene ester resin, a polyolefin resin, a diene resin, a polyamide resin, a polyether resin, a polysulfone resin and a polyphenylene resin or a mixture of at least two members of these resins.

## Patentansprüche

1. Verfahren zur Herstellung eines einen Hohlbereich aufweisenden Dachgepäckträgers (30) für die Verwendung auf einem Kraftfahrzeug, umfassend ein Gestellkörperteil (31) und Fußteile (32) an beiden Enden des Gestellkörperteils (31), wobei die Fußteile (32) mit dem Kraftfahrzeug verbunden sind, und wobei das Gestellkörperteil (31) und die Fußteile (32) eine Einheit bilden;
wobei das Verfahren Folgendes umfasst:
Vorsehen einer Form (10) mit einem Hohlraum (13) zum Bilden des Dachgepäckträgers (30), eines Harzeinspritzbereichs (15) und eines druckbeaufschlagten Fluid-Einführbereichs (16), wobei der Hohlraum (13) in der Form (10) so ausgebildet ist, dass die Längsrichtung des Gestellkörperteils (31) allgemein mit der vertikalen Richtung der Form (10) übereinstimmt, wobei der Harzeinspritzbereich (15) in der Form (10) so angeordnet ist, um die Einspritzung des geschmolzenen thermoplastischen Harzes in einen unteren Endbereich des Hohlraums (13) zu ermöglichen, und wobei der druckbeaufschlagte Fluid-Einführbereich (16) in der Form (10) so angeordnet ist, um die Einführung des unter Druck gesetzten Fluids in das thermoplastische Harz durch den unteren Endbereich des Hohlraums (13) zu ermöglichen;
Einspritzen eines geschmolzenen thermoplastischen Harzes in den Hohlraum (13) durch den Harzeinspritzbereich (15); und
Einführen eines unter Druck gesetzten Fluids mit einem Druck von 20 bis 500 kgf/cm²-G in das thermoplastische Harz in dem Hohlraum (13) durch den druckbeaufschlagten Fluid-Einführbereich (16).

2. Verfahren nach Anspruch 1, wobei ein drittes Beinteil (32A) in einem zentralen Bereich des Gestellkörperteils (31) unter Bildung einer Einheit mit dem Gestellkörperteil (31) ausgebildet ist.

3. Verfahren nach Anspruch 1, wobei ein drittes Beinteil (32A), das durchgehend von den Beinteilen (32) an beiden Enden des Gestellkörperteils (31) ausgebildet ist, in dem Gestellkörperteil (31) unter Bildung einer Einheit mit dem Gestellkörperteil (31) ausgebildet wird.

4. Verfahren nach Anspruch 1, 2 oder 3, wobei das thermoplastische Harz mindestens ein thermoplastisches Harz ist, gewählt aus der Gruppe bestehend aus einem Polycarbonatharz, einem thermoplastischen Polyesterharz, einem Polystyrolharz, einem Polyarylenesterharz, einem Polyolefinharz, einem Dienharz, einem Polyamidharz, einem Polyetherharz, einem Polysulfonharz und einem Polyphenylenharz oder einer Mischung von mindestens zwei Vertretern dieser Harze.

## Revendications

1. Procédé de fabrication d'une galerie de toit (30) comportant une partie creuse pour véhicule à moteur, qui comprend un élément de corps de galerie (31) et des éléments formant pattes (32) aux deux extrémités de l'élément de corps de galerie (31), lesdits éléments formant pattes (32) étant fixés au véhicule à moteur, et dans lequel l'élément de corps de galerie (31) et les éléments formant pattes (32) sont formés d'un seul tenant,
le procédé comprenant les étapes consistant à :
prendre un moule (10) comportant une cavité (13) pour former la galerie de toit (30), une partie d'injection de résine (15) et une partie d'introduction de fluide sous pression (16), ladite cavité (13) étant formée dans le moule (10) de telle manière que la direction longitudinale de l'élément de corps de galerie (31) correspond globalement à la direction verticale du moule (10), la partie d'injection de résine (15) étant placée dans le moule (10) de façon à permettre l'injection de la résine thermoplastique fondue dans une partie d'extrémité inférieure de la cavité (13), et la partie d'introduction de fluide sous pression (16) étant placée dans le moule (10) de façon à permettre l'introduction du fluide sous pression dans la résine thermoplastique par la partie d'extrémité inférieure de la cavité (13),
injecter de la résine thermoplastique fondue dans la cavité (13) par la partie d'injection de résine (15), et
introduire un fluide sous pression ayant une pression de 20 à 500 kgf/cm²-G dans la résine thermoplastique présente dans la cavité (13) via la partie d'introduction de fluide sous pression (16).

2. Procédé selon la revendication 1, dans lequel un troisième élément formant patte (32A) est formé dans une partie centrale de l'élément de corps de galerie (31), d'un seul tenant avec l'élément de corps de galerie (31).

3. Procédé selon la revendication 1, dans lequel un troisième élément formant patte (32A) formé en continu depuis les éléments formant pattes (32) aux deux extrémités de l'élément de corps de galerie (31) est prévu dans l'élément de corps de galerie (31), d'un seul tenant avec l'élément de corps de galerie (31).

4. Procédé selon la revendication 1, 2 ou 3, dans lequel la résine thermoplastique est au moins une résine thermoplastique choisie dans l'ensemble comprenant une résine polycarbonate, une résine polyester thermoplastique, une résine de polystyrène, une résine polyarylène-ester, une résine de polyoléfine, une résine de diène, une résine polyamide, une résine polyéther, une résine polysulfone et une résine polyphénylène, ou un mélange d'au moins deux de ces résines.
